# EUROPÄISCHE PATENTANMELDUNG

(11) **EP 1 209 587 A2**
(43) Veröffentlichungstag der Anmeldung: **29.05.2002**
(21) Anmeldenummer: 01127594.8
(22) Anmeldetag: 19.11.2001
(51) Int. Cl.: G06F 17/30

(54) **Verfahren und Vorrichtung zur Datenwandlung**

(30) Priorität: 24.11.2000 DE 10058395
(71) Anmelder: SIEMENS AKTIENGESELLSCHAFT, 80333 München (DE)
(72) Erfinder: Macher, Andreas, 92318 Neumarkt (DE)

(57) **Zusammenfassung**

Für die Bereitstellung proprietärer Daten für eine größere Allgemeinheit sind diese in standardisiertes Format 9 zu wandeln. Hierzu werden die proprietären Daten 2 bestehend aus Rohdaten und Graphikdaten bereitgestellt und die Rohdaten in standardisiertes Rohdatenformat 6 konvertiert. Bereitgestellte Stildaten 8, die einen graphischen Darstellungsstil von Rohdaten 6 definieren, werden mit den konvertierten Rohdaten verknüpft, so dass die konvertierten Rohdaten in einem standardisierten Graphikformat darstellbar sind.

## Beschreibung

Die vorliegende Erfindung betrifft ein Verfahren und eine Vorrichtung zur Wandlung proprietärer Daten in Daten eines standardisierten Formats.

Anwendungsprogramme speichern und verwalten Daten in ihrem jeweils spezifischen Datenformat. Diese Daten in anwendungsspezifischem Format, sogenannte proprietäre Daten, lassen sich in der Regel nur visualisieren bzw. verarbeiten, wenn das dazu passende Programm verfügbar ist. Der plattformübergreifende Datenaustausch wird dadurch sehr erschwert.

Dieses allgemeine Problem wird zumindest teilweise durch auf dem Markt bereits verfügbare Programme gelöst. Beispielsweise stellt Lotus den sogenannten "FastSite Web Publisher" zur Erstellung von Web-Sites zur Verfügung. Mit diesem Web Publisher wird den Endanwendern die Möglichkeit gegeben, aus vorhandenen SmartSuit-Dokumenten eine Web-Site zu erstellen. Dabei kann der Benutzer Sites oder Sätze aus mehreren Dateien auswählen und alle gleichzeitig in das standardisierte HTML-Format umwandeln. Die Dateien brauchen nicht dasselbe Format zu haben, sondern können eine Mischung aus Dokumenten, Arbeitsblättern, Berichten oder Präsentationen sein. Das Programm ermöglicht es zwar, bestehende Dokumente in HTML-Format zu konvertieren, aber es wird nur eine bestimmte Anzahl an Quellformaten unterstützt. Darüber hinaus sind die Möglichkeiten des Anwenders, in den Konvertierungsvorgang gestalterisch einzugreifen, beschränkt und das Layout des Endprodukts kann nicht individuell bestimmt werden. Es kann lediglich zwischen einigen vordefinierten Layouts ausgewählt werden.

Angesichts der oben dargestellten Probleme besteht die Aufgabe der vorliegenden Erfindung darin, ein Verfahren und eine Vorrichtung vorzuschlagen, das eine individuell ausgeprägte Datenkonvertierung aus proprietärer Umgebung ermöglicht.

Erfindungsgemäß wird diese Aufgabe gelöst durch ein Verfahren zur Wandlung proprietärer Daten in Daten eines standardisierten Formats mit den Schritten: Bereitstellen der proprietären Daten, die Rohdaten und Graphikdaten umfassen, Konvertieren der Rohdaten in ein standardisiertes Rohdatenformat zu konvertierten Rohdaten, Bereitstellen von Stildaten, die einen graphischen Darstellungsstil von Rohdaten definieren, und Verknüpfen der konvertierten Rohdaten mit den Stildaten, so dass die konvertierten Rohdaten in einem standardisierten Graphikformat darstellbar sind.

Durch die getrennte Verarbeitung der Rohdaten, die den eigentlichen Informationsgehalt der zu wandelnden Daten darstellen, und der Graphikdaten, die lediglich zur Visualisierung der Rchdaten dienen, ist eine sehr individuell gestaltbare Datenkonvertierung möglich.

Vorzugsweise können mehrere individuelle Layouts vordefiniert werden, so dass die Daten sozusagen mit einem Knopfdruck in ein bestimmtes Format gewandelt werden können. Bei der Wandlung können die originalen Graphikdaten berücksichtigt werden, oder aber es kann ein vollständig neues Layout gewählt werden.

Bei einer Weiterentwicklung des Verfahrens können aus den Rohdaten, die hauptsächlich aus alphanumerischen Zeichen und einfachen Formatangaben bestehen, alle oder eine Teilmenge davon für die Wandlung ausgewählt werden. Bei den einzelnen Verfahrensschritten können ferner standardisierte Elemente bzw. Funktionen verwendet werden. Dadurch kann das Verfahren wesentlich vielseitiger angewendet werden.

Das erfindungsgemäße Verfahren lässt sich als Computerprogramm realisieren. Unter Verwendung von standardisierten Schnittstellen werden viele Anwendungsschranken aufgehoben.

Erfindungsgemäß wird auch eine Datenwandlungsvorrichtung bereitgestellt, deren Einrichtungen zur Durchführung des oben genannten Verfahrens ausgestaltet sind.

Die vorliegende Erfindung wird nun anhand der beigefügten Zeichnungen näher erläutert. In ihnen zeigen:
- FIG. 1: ein Ausführungsbeispiel der vorliegenden Erfindung;
- FIG. 2: Daten im XML-Format zu dem Ausführungsbeispiel von FIG. 1;
- FIG. 3: ein Blockdiagramm des erfindungsgemäßen Verfahrens; und
- FIG. 4: Daten im HTML-Format zu dem Ausführungsbeispiel von FIG. 1.

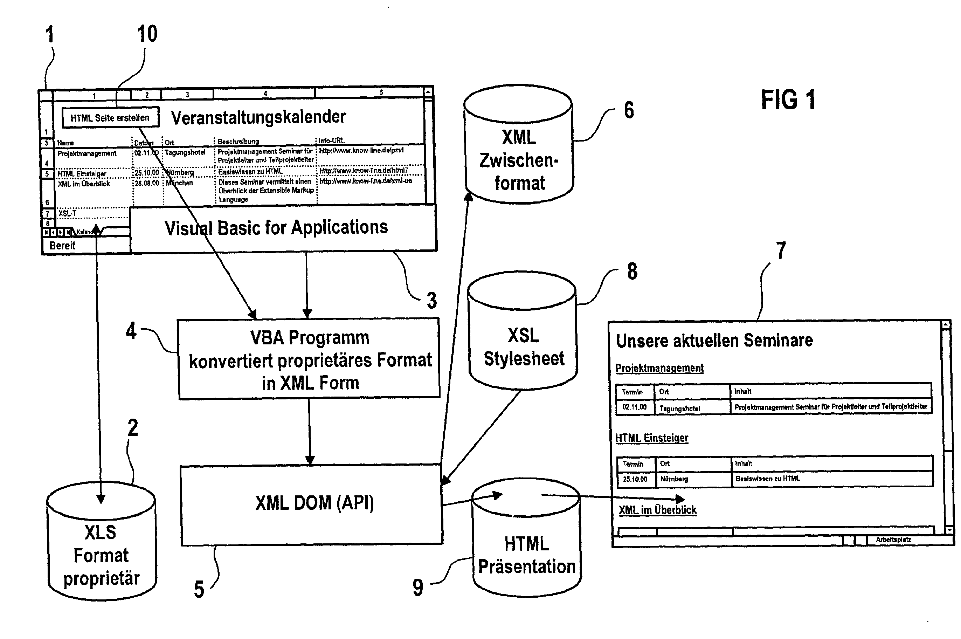

Die folgende Darstellung eines konkreten Ausführungsbeispiels dient zum besseren Verständnis der vorliegenden Erfindung. Das Anwendungsbeispiel ist in FIG. 1 skizziert. Die in einem spezifischen Anwendungsprogramm in einem proprietären Format 2 zusammengestellten Daten werden gemäß einer proprietären Darstellung 1 visualisiert. Im vorliegenden Beispiel beinhaltet die proprietäre Darstellung 1 einen Veranstaltungskalender in Form einer Tabelle mit mehreren Zeilen und Spalten. Mit dem der proprietären Darstellung 1 überlagerten Balken 3 ist angedeutet, dass das spezifische Anwendungsprogramm, mit dem die proprietäre Darstellung 1 erzeugt wurde, eine Programmierschnittstelle beinhaltet. Die Programmierschnittstelle ist üblicherweise standardisiert, wie es auch bei der hier dargestellten Programmierschnittstelle "Visual Basic for Applications" (VBA) der Fall ist.

Mit Hilfe der VBA-Schnittstelle 3 wird ein VBA-Programm 4 erstellt. Dieses VBA-Programm 4 dient zur Konvertierung des proprietären Formats in das standardisierte XML-Format. Das VBA-Programm 4 greift beim Konvertieren auf eine Programmbibliothek XML DOM 5 zurück. Das Document Object Model (DOM) ist ein sogenanntes Application Programming Interface (API) zur Erstellung von HTML- und XML-Dokumenten. Das DOM 5 dient dazu, die logische Struktur eines Dokuments zu definieren. Im vorliegenden Fall dient das DOM 5 zur Erzeugung von Daten im XML-Format 6.

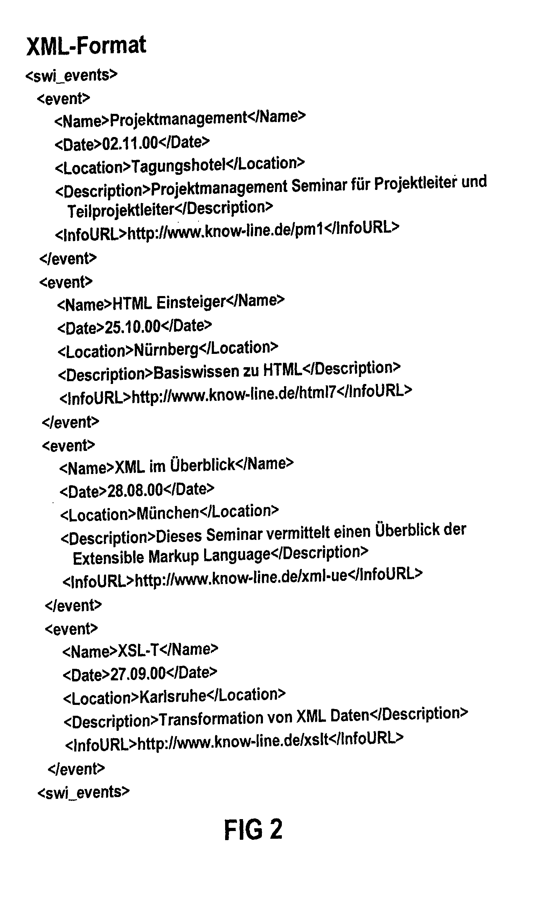

In FIG.2 sind die in diesem Beispiel gewählten proprietären Daten in XML-Format dargestellt. Wie sich leicht erkennen lässt, sind die Daten in der DOM-typischen Baumstruktur formatiert. Dies bedeutet, dass die einzelnen Einträge in der Tabelle der proprietären Darstellung 1 als Objekte markiert und logisch strukturiert sind. Diese logisch strukturierten Daten im XML-Format 6 dienen bei dem erfindungsgemäßen Verfahren als Zwischenformat.

Ziel ist es nun die im standardisierten XML-Format vorliegenden Rohdaten individuell zu visualisieren. Im konkreten Fall sollen die aus den proprietären Daten gewonnenen Rohdaten in eine individuelle Web-Site 7 umgesetzt werden.

Zur Visualisierung der Rohdaten im XML-Format 6 sind diese mit Stildaten 8 zu verknüpfen. Die Stildaten 8 stellen ein Datenpaket dar, das das gesamte individuelle Layout definiert. Dieses Datenpaket wird üblicherweise als style-sheet bezeichnet.

Die Stildaten 8 sind in der Regel in einer zu den Rohdaten 6 passenden style-sheet-Sprache abzufassen. Die für XML-Daten zu verwendende style-sheet-Sprache ist XSL (XML style language).

Bei der Verknüpfung der XML-Rohdaten 6 mit den XSL-Stildaten 8 werden Präsentationsdaten 9 im HTML-Format generiert. Mit einem Browser lassen sich die Präsentationsdaten 9 gemäß der Web-Site-Darstellung 7 visualisieren.

Im vorliegenden Beispiel werden somit die im XLS-Format 2 vorliegenden proprietären Daten über ein XML-Zwischenformat 6 mittels einer XSL-Stile-Sheet 8 konvertiert und durch eine Web-Site-Darstellung 7 visualisiert. Der gesamte Konvertierungsvorgang lässt sich bei geeigneter Programmierung durch Betätigung nur einer Schaltfläche durchführen. Hierzu kann mittels der Programmierschnittstelle 3 eine entsprechende Schaltfläche 10 in der proprietären Darstellung 1 erzeugt werden. Weitere gleichfunktionierende Schaltflächen können mit abgewandelten XSL-Stile-Sheets 8 verknüpft werden, so dass der Anwender durch Betätigen einer entsprechenden Schaltfläche 10 das jeweils gewünschte Layout seiner Web-Site 7 erhält.

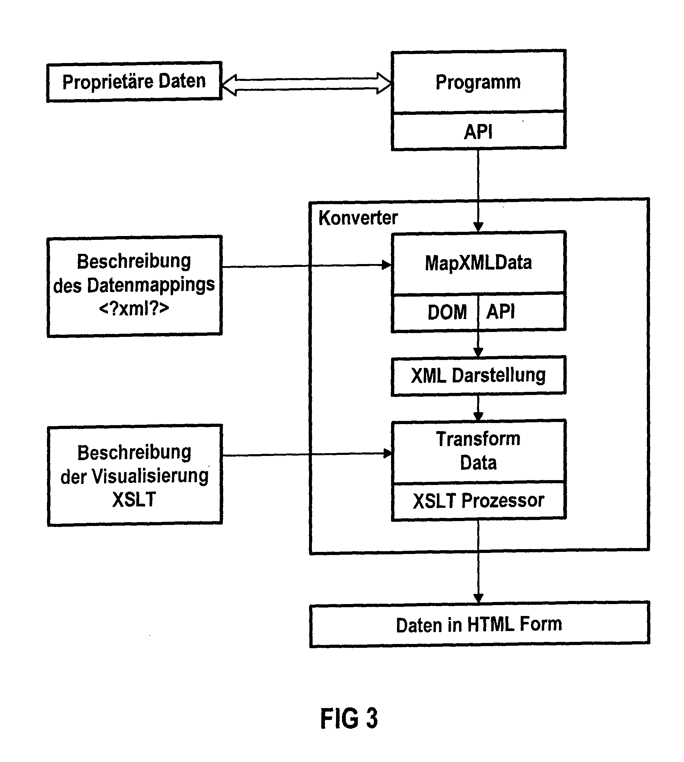

In FIG. 3 ist das Verfahren zur Wandlung proprietärer Daten in Daten eines standardisierten Formats gemäß der vorliegenden Erfindung nochmals in anderer Form als Blockdiagramm dargestellt. Mittels eines spezifischen Programms werden proprietäre Daten erzeugt, die in dieser Form beispielsweise über das Internet nicht bereitgestellt werden können. Da übliche HTML-Editoren in der Regel erheblich weniger Möglichkeiten als die spezialisierten Anwendungsprogramme für die Datenverwaltung bieten, ist es notwendig, dass die Daten in proprietärer Form erstellt und anschließend in HTML-Format für das Internet, Intranet und dergleichen konvertiert werden. Für diese Konvertierung sorgt der in FIG. 3 dargestellte Konverter.

Das Konvertierungsprogramm MapXMLData erhält von dem spezifischen Anwendungsprogramm Rohdaten, die die eigentliche Information der proprietären Daten darstellen und einfach formatiert sind, sowie gegebenenfalls Graphikdaten, wenn die proprietäre Visualisierung bei der Umwandlung in das HTML-Format ganz oder teilweise übernommen werden soll. Weiterhin erhält das Konvertierungsprogramm MapXMLData vom Benutzer eine Beschreibung des Daten-Mappings. Der Benutzer kann diese Beschreibung dazu verwenden, von den proprietären Daten eine Auswahl zu treffen, welche dann der Konvertierung unterworfen wird. Zur Konvertierung aller bzw. der ausgewählten Rohdaten verwendet das Konvertierungsprogramm MapXMLData die standardisierte Programmbibliothek des Application Programming Interface DOM. Als Zwischenergebnis nach der Konvertierung erhält man XML-Daten, wie sie in FIG. 2 wiedergegeben sind.

Die XML-Daten werden einer Transformation bzw. Verknüpfung unterzogen, um sie entsprechend graphisch aufzubereiten. Der Anwender beschreibt eine Visualisierung der Daten, in dem er ein Style Sheet in XSL-Sprache generiert. Die XSLT-Transformation findet unter Verwendung eines standardisierten XSLT-Prozessors statt, wobei die XML-Daten mit Hilfe des oder der Style-Sheets mit den entsprechenden graphischen Steuerbefehlen versetzt werden, um die gewünschte HTML-Datei zu erhalten.

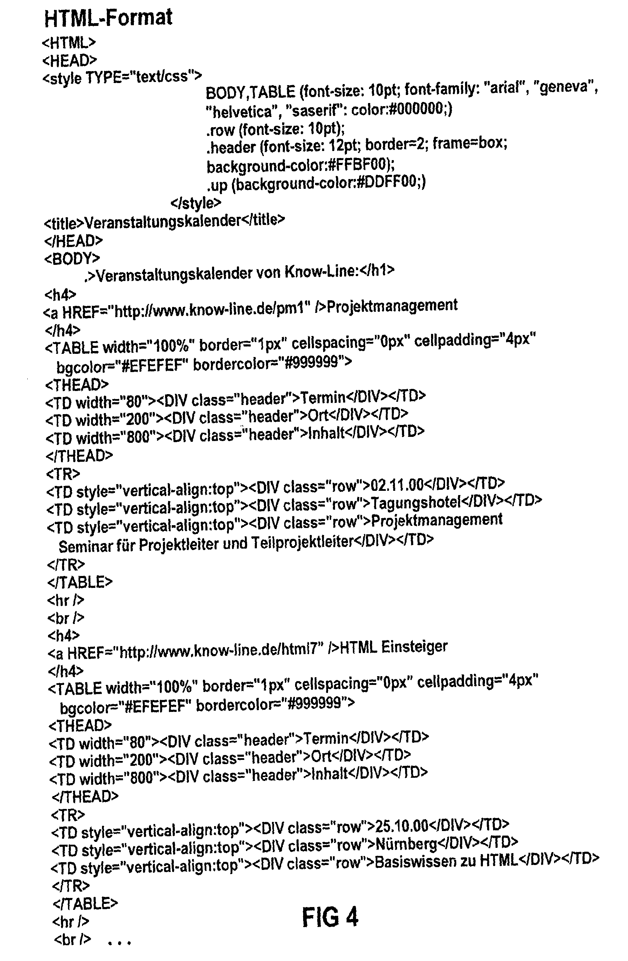

Die HTML-Datei für das vorliegende Ausführungsbeispiel ist in FIG. 4 auszugsweise dargestellt. Die dazugehörige Visualisierung ist in FIG. 1 in der Web-Site-Darstellung 7 wiedergegeben. Die HTML-Datei umfasst neben den reinen Informationsdaten, die wie in der XML-Datei logisch strukturiert sind, im Header und zwischen den Datenblöcken Graphikanweisungen. Diese Graphikanweisungen resultieren aus dem benutzerdefinierten Style-Sheet.

Unter Umständen können auch mehrere Style-Sheets, gegebenenfalls in hierarchischer Ordnung, zur Erzeugung der Graphikanweisungen herangezogen werden. Darüber hinaus ist es auch denkbar, proprietäre Graphikbefehle mit einem oder mehreren Style-Sheets zu kombinieren, um die endgültigen HTML-Graphikanweisungen zu erstellen. Selbstverständlich können, bei entsprechender Kompatibilität, die proprietären Graphikanweisungen auch unmittelbar in HTML-Graphikanweisungen transformiert werden, so dass die proprietäre Darstellung 1 mit der Web-Site-Darstellung 7 von FIG. 1 identisch ist.

Die oben dargestellte Konvertierung und Transformation proprietärer Daten eignet sich nicht nur für das Ziel, HTML-Daten zu erstellen, sondern es können auch andere beliebige standardisierte Zielformate erreicht werden, wenn die entsprechenden Programmbibliotheken zur Verfügung stehen.

Erfindungsgemäß ist es somit möglich, Daten in einem spezifischen Programm in proprietärer Form zu verwalten, diese "per Knopfdruck" in eine standardisierte Form zu wandeln und sie einer größeren Allgemeinheit zur Verfügung zu stellen. Das Ändern der Formatierung der Daten von der proprietären Formatierung zu einer benutzerdefinierten Formatierung bedarf keiner Änderung des Konvertierungsprogramms mehr, sondern der Anwender stellt hierfür lediglich ein oder mehrere Style-Sheets für die entsprechende Formatierung zur Verfügung.

## Patentansprüche

1. Verfahren zur Wandlung proprietärer Daten in Daten eines standardisierten Formats mit den Schritten:
Bereitstellen der proprietären Daten, die Rohdaten und Graphikdaten umfassen,
Konvertieren der Rohdaten in ein standardisiertes Rohdatenformat zu konvertierten Rohdaten (6),
Bereitstellen von Stildaten (8), die einen graphischen Darstellungsstil von Rohdaten definieren,und
Verknüpfen der konvertierten Rohdaten (6) mit den Stildaten (8), so dass die konvertierten Rohdaten in einem standardisierten Graphikformat darstellbar sind.

2. Verfahren nach Anspruch 1, wobei das Verfahren durch Betätigen eines Schalters oder einer Schaltfläche (10) vollständig ausgeführt wird.

3. Verfahren nach Anspruch 1 oder 2, wobei das Verknüpfen der konvertierten Rohdaten (6) mit den Stildaten (8) unter Berücksichtigung der Graphikdaten der proprietären Daten erfolgt.

4. Verfahren nach einem der Ansprüche 1 bis 3, wobei zwischen dem Bereitstellen und dem Konvertieren der Rohdaten die folgenden Schritte durchgeführt werden:
Bereitstellen von Auswahldaten und
Auswählen aller oder einer Teilmenge der Rohdaten der proprietären Daten unter Verwendung der Auswahldaten, wobei zur Weiterverarbeitung die ausgewählten Rohdaten verwendet werden.

5. Verfahren nach einem der Ansprüche 1 bis 4, wobei das Konvertieren unter Verwendung von standardisierten Konvertierungselementen (5) und/oder das Verknüpfen unter Verwendung standardisierter Verknüpfungselemente erfolgt.

6. Verfahren nach einem der Ansprüche 1 bis 5, mit dem weiteren Schritt des Extrahierens der Rohdaten aus den proprietären Daten mittels standardisierter Verfahrensschritte (3).

7. Computerprogrammprodukt, bei dem die Verfahrensschritte nach einem der Ansprüche 1 bis 2 programmiertechnisch umgesetzt sind.

8. Computerprogrammprodukt nach Anspruch 7, wobei das standardisierte Rohdatenformat das XML-Datenformat und das standardisierte Graphikformat das HTML-Datenformat als Grundlage umfasst.

9. Computerprogrammprodukt nach Anspruch 7 oder 8, wobei die Konvertierungselemente Elemente aus der standardisierten Programmbibliothek "Document Object Model" (5) umfassen.

10. Computerprogrammprodukt nach Anspruch 7, 8 oder 9, wobei die Verknüpfungselemente Elemente eines standardisierten XSLT-Prozessors umfassen.

11. Datenverarbeitungsanlage, in der ein Computerprogrammprodukt nach einem der Ansprüche 7 bis 10 zur Abarbeitung gespeichert und ablaufbar ist.

12. Datenwandlungsvorrichtung zur Wandlung proprietärer Daten in Daten eines standardisierten Formats gemäß den Ansprüchen 1 bis 6 mit
einer Einrichtung zur Bereitstellen der proprietären Daten, die Rohdaten und Graphikdaten umfassen,
einer Konvertierungseinrichtung zum Konvertieren der Rohdaten in ein standardisiertes Rohdatenformat zu konvertieren Rohdaten (6),
einer Einrichtung zum Bereitstellen von Stildaten (8), die einen graphischen Darstellungsstil von Rohdaten definieren,
einer Verknüpfungseinrichtung zum Verknüpfen der konvertierten Rohdaten (6) mit den Stildaten (8), so dass die konvertierten Rohdaten (6) in einem standardisierten Graphikformat darstellbar sind.
